# FASCICULE DE BREVET EUROPEEN

(11) **EP 3 252 493 B1**
(45) Date de publication et mention de la délivrance du brevet: **20.10.2021**
(21) Numéro de dépôt: 17174101.0
(22) Date de dépôt: 01.06.2017
(51) Int. Cl.: G01S 5/02, G01S 5/18, G01S 1/80, H04W 40/02

(54) **PROCÉDÉ DE LOCALISATION D'ÉLÉMENTS MOBILES**
LOKALISIERUNGSVERFAHREN VON MOBILEN ELEMENTEN
METHOD FOR LOCATING MOBILE ELEMENTS

(30) Priorité: 02.06.2016 FR 1655041
(43) Date de publication de la demande: 06.12.2017
(73) Titulaire: Kerlink, 35235 Thorigné-Fouillard (FR)
(72) Inventeur: WYLD, Brian, 38130 ECHIROLLES (FR)
(74) Mandataire: Cabinet Beaumont

(56) Documents cités:
- WO-A2-2012/052766
- US-A- 4 253 166
- US-A1- 2006 071 780
- US-A1- 2010 246 405
- US-A1- 2012 143 562
- US-A1- 2013 295 954
- US-B2- 6 473 038

## Description

### Domaine

La présente demande concerne un procédé de localisation d'objets, en particulier un procédé de localisation d'objets situés dans une zone délimitée telle qu'un bâtiment.

### Exposé de l'art antérieur

Des objets tels que des appareils médicaux d'un centre hospitalier ou des outils d'un atelier sont souvent déplacés. On souhaite localiser ces objets dans le périmètre de l'hôpital ou de l'atelier. De même, on a besoin de localiser des objets déplacés dans le périmètre de locaux tels que par exemple des bâtiments industriels ou commerciaux. Pour localiser ces objets, on les équipe classiquement de balises mobiles qui reçoivent des signaux radio émis par des balises fixes de positions déterminées. Un procédé de localisation utilise les signaux radio reçus par chaque balise mobile pour estimer la position des balises mobiles.

Les documents US 2010/246405, US 2006/071780, et US 2013/295954 divulguent des procédés de localisation.

Ce type de procédé de localisation pose divers problèmes. En particulier les signaux radio reçus par chaque balise peuvent dépendre de l'orientation de la balise ou d'obstacles présents sur le chemin des signaux radio, ce qui pose des problèmes de fiabilité et de précision de la position déterminée. En outre, les balises mobiles sont alimentées par des piles ou des batteries dont la durée de fonctionnement est limitée.

### Résumé

Ainsi, un mode de réalisation prévoit de pallier tout ou partie des inconvénients décrits ci-dessus.

Un mode de réalisation prévoit un procédé permettant de déterminer la position de balises mobiles de manière fiable et précise.

Un mode de réalisation prévoit un procédé permettant une grande durée de fonctionnement de balises mobiles. L'invention est définie dans la revendication 1.

Ainsi, un mode de réalisation prévoit un procédé de détermination simultanée de positions spatiales de balises mobiles dans une zone comportant des balises fixes, comprenant : une étape a) comportant : la collecte par au moins certaines des balises mobiles et fixes de valeurs représentatives de premiers signaux émis par au moins certaines des balises mobiles et fixes ; et la collecte par chaque balise mobile d'une valeur représentative d'au moins un deuxième signal, le deuxième signal et les premiers signaux étant de natures différentes ; et une étape b) de détermination d'une suite d'ensembles de positions estimées des balises mobiles dans laquelle : chaque ensemble de positions estimées est associé à une valeur d'erreur représentative d'un ensemble de différences, chaque différence étant entre une valeur collectée à l'étape a) et une valeur théorique correspondante déterminée par une modélisation à partir dudit ensemble de positions estimées ; et les valeurs d'erreur associées à des ensembles successifs de positions estimées sont décroissantes, la suite s'arrêtant lorsqu'un critère de convergence est atteint.

Selon un mode de réalisation, l'étape a) comprend la collecte par chaque balise mobile de valeurs représentatives de premiers signaux émis par au moins certaines des balises fixes.

Selon un mode de réalisation, l'étape a) comprend la collecte par chaque balise fixe de valeurs représentatives de premiers signaux émis par au moins certaines des balises mobiles.

Selon un mode de réalisation, l'étape a) comprend la collecte par chaque balise mobile de valeurs représentatives de premiers signaux émis par au moins certaines des balises mobiles distinctes de ladite balise mobile.

Selon un mode de réalisation, les premiers signaux sont des signaux électromagnétiques, et les valeurs représentatives des signaux électromagnétiques sont des intensités reçues.

Selon un mode de réalisation, ledit au moins un deuxième signal est un signal ultrasonore émis par l'une des balises fixes, le signal ultrasonore étant de fréquence d'émission variable et la valeur représentative du signal ultrasonore étant une fréquence reçue pendant une période de réception.

Selon un mode de réalisation, l'étape a) comprend la collecte par chaque balise mobile de valeurs représentatives de signaux ultrasonores, chaque signal ultrasonore étant émis par l'une des balises fixes et étant de fréquence d'émission variable, les valeurs représentatives des signaux ultrasonores étant des fréquences reçues pendant une période de réception, les signaux ultrasonores ayant des fréquences comprises dans des bandes de fréquences disjointes.

Selon un mode de réalisation, le signal ultrasonore est émis pendant une période d'émission de durée comprise entre 10 ms et 30 ms, la fréquence d'émission variant dans une bande de fréquences de largeur comprise entre 1 kHz et 3 kHz, la période de réception ayant une durée comprise entre 1 ms et 5 ms.

Selon un mode de réalisation, à l'étape a) chaque balise mobile collecte en outre une valeur d'un troisième signal de nature différente de la nature des premiers signaux et de la nature du deuxième signal.

Selon un mode de réalisation, le troisième signal est d'une nature choisie dans le groupe suivant : température ambiante ; niveau de lumière ambiante ; niveau sonore ; champ magnétique ; niveau ambiant de signaux radio ; temps d'arrivée de signaux radio ; et salinité, les balises mobiles étant immergées dans de l'eau de mer.

Selon un mode de réalisation, le procédé comprend en outre une étape de collecte par chaque balise mobile d'une valeur d'un quatrième signal dépendant du niveau de hauteur de la balise mobile, suivie avant l'étape b) d'une étape de détermination des niveaux de hauteur des balises mobiles.

Selon un mode de réalisation, le quatrième signal est un signal de pression.

Selon un mode de réalisation, le premier ensemble de positions de la suite d'ensembles de positions estimées comprend des positions déterminées à une exécution précédente des étapes a) et b) et/ou comprend des barycentres de positions d'au moins certaines des balises fixes.

Selon un mode de réalisation, la valeur d'erreur représentative d'un ensemble de différences correspond à une norme d'un vecteur dont les coordonnées sont lesdites différences.

Selon un mode de réalisation, le critère de convergence est atteint lorsque toutes les positions estimées contenues dans deux ensembles successifs de positions estimées sont séparées d'une distance inférieure à un seuil.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'une zone comprenant des balises fixes et des balises mobiles ;
la figure 2 illustre des étapes d'un mode de réalisation d'un procédé de localisation de balises mobiles ;
les figures 3, 4, 5A, 5B et 6 illustrent les étapes du procédé illustré en figure 2 ;
la figure 7A représente des signaux échangés entre des balises ;
les figures 7B et 7C illustrent l'évolution de la fréquence de signaux émis par des balises en fonction du temps ;
la figure 8 représente un mode de réalisation d'une zone comprenant des balises fixes et des balises mobiles ;
la figure 9 illustre des étapes d'un autre mode de réalisation d'un procédé de localisation de balises mobiles ; et
la figure 10 est une vue de dessus schématique d'une zone comprenant des balises fixes et des balises mobiles.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés.

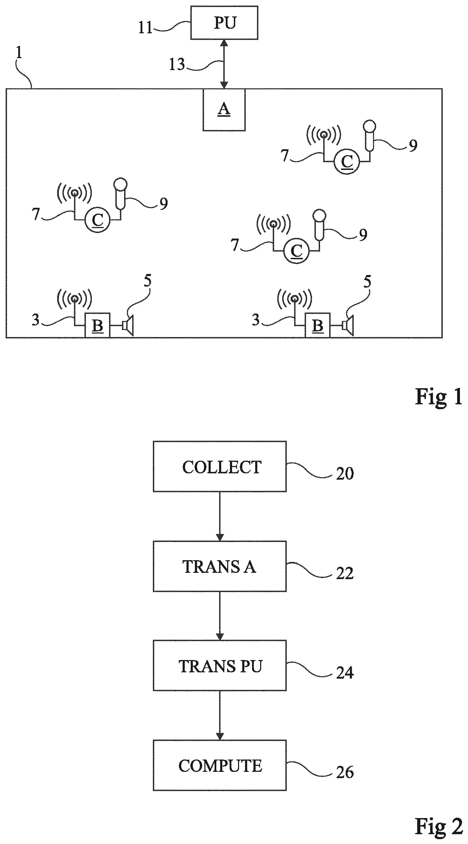

La figure 1 représente un exemple d'un mode de réalisation d'une zone 1 comprenant des balises fixes et des balises mobiles. La zone 1 peut être par exemple un atelier, un centre hospitalier, un bâtiment industriel, ou un hangar de stockage. La zone 1 comprend une unité A de réception de données, des balises mobiles C que l'on souhaite localiser et des balises fixes B. La figure 1 représente à titre d'illustration deux balises fixes B et trois balises mobiles C. Dans des cas concrets, à titre d'exemple, le nombre de balises fixes B peut être compris entre 3 et 100, et le nombre de balises mobiles C peut être compris entre 1 et 1000.

Chaque balise fixe B comprend une antenne 3 d'émission et de réception de signaux électromagnétiques tels que des signaux radio. Chaque balise fixe B comprend en outre un générateur d'ultrason 5 tel que par exemple un haut-parleur ou un transducteur piézoélectrique. Les balises fixes B sont réparties dans la zone 1 à des positions prédéfinies et sont fixées par exemple à des murs ou des cloisons. Les balises fixes B peuvent être alimentées électriquement par un réseau d'alimentation non représenté.

Chaque balise mobile C comprend une antenne 7 d'émission et de réception de signaux électromagnétiques. Chaque balise mobile C comprend en outre un microphone 9 prévu pour capter des ultrasons. Chaque balise mobile C est fixée à un objet déplaçable non représenté et peut comprendre par exemple une pile ou une batterie. A titre d'exemple, chaque balise mobile C a sa plus grande dimension inférieure à 5 cm.

L'unité A est prévue pour recevoir des valeurs en provenance des balises fixes B et des balises mobiles C, et est prévue pour transmettre ces valeurs à une unité de traitement 11 (PU) par une liaison 13. A titre d'exemple, l'unité de traitement 11 comprend un ordinateur. La liaison 13 peut être une liaison de type Ethernet ou une liaison sans fil. A titre d'autre exemple, l'unité A comprend une passerelle internet et la liaison 13 comprend une connexion par le réseau Internet.

La figure 2 illustre des étapes d'un mode de réalisation d'un procédé de localisation des balises mobiles C décrites en relation avec la figure 1. Le procédé comprend des étapes successives 20, 22, 24 et 26.

A l'étape 20 (COLLECT), les balises fixes B et les balises mobiles C émettent des signaux. Des valeurs représentatives de ces signaux, par exemple des valeurs d'intensité reçue, sont collectées par chacune des balises fixes B et des balises mobiles C. A l'étape 22 (TRANS A), les valeurs collectées à l'étape de collecte 20 sont transmises à l'unité A. A l'étape 24 (TRANS PU), l'unité A transmet les valeurs collectées à l'unité de traitement 11. A l'étape 26 (COMPUTE), l'unité de traitement 11 détermine les positions des balises mobiles C à partir des valeurs collectées.

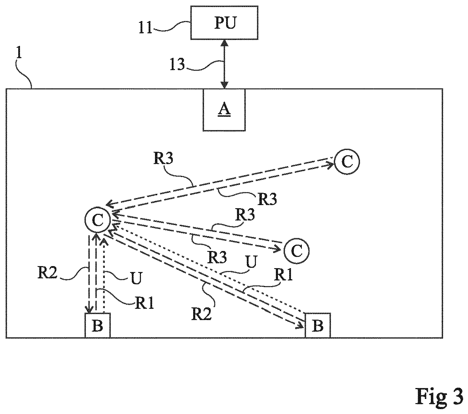

La figure 3 est une figure analogue à la figure 1 et illustre un mode de réalisation de l'étape 20 du mode de réalisation de procédé décrit en relation avec la figure 2. A cette étape, chacune des balises fixes B et des balises mobiles C émet un signal électromagnétique, et chaque balise fixe B émet un signal ultrasonore. En figure 2, les valeurs représentatives de signaux émis et reçus sont représentées pour une seule des balises mobiles C. Les valeurs collectées sont les suivantes :
- des valeurs R1, chacune étant représentative d'un signal électromagnétique émis par l'une des balises fixes B et collecté par l'une des balises mobiles C ;
- des valeurs R2, chacune étant représentative d'un signal électromagnétique émis par l'une des balises mobiles C et collecté par l'une des balises fixes B ;
- des valeurs R3, chacune étant représentative d'un signal électromagnétique émis par l'une des balises mobiles C et collecté par l'une des balises mobiles C ; et
- des valeurs U, chacune étant représentative d'un signal ultrasonore émis par l'une des balises fixes B et collecté par l'une des balises mobiles C.

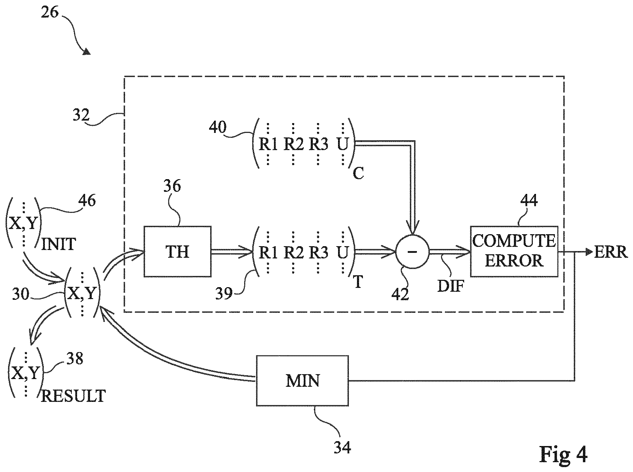

La figure 4 illustre un mode de réalisation de l'étape 26 du mode de réalisation de procédé décrit en relation avec la figure 2. L'étape 26 comprend une succession de cycles. A chaque cycle, un ensemble 30 de positions estimées est déterminé. L'ensemble 30 contient une position estimée pour chaque balise mobile C. Dans le mode de réalisation illustré, la position estimée de chaque balise mobile C est représentée par un couple de coordonnées (X,Y) dans un plan horizontal, les niveaux de hauteur des balises mobiles C n'étant pas à déterminer dans le présent mode de réalisation. Chaque cycle comprend une étape 32 de détermination d'une valeur d'erreur ERR à partir de l'ensemble 30 des positions estimées, et comprend une étape 34 de minimisation (MIN). A l'étape 34, l'ensemble 30 de positions estimées qui sera utilisé au cycle suivant est déterminé à partir de la valeur d'erreur ERR et de l'ensemble 30 considéré.

Les étapes de minimisation 34 successives font en sorte d'obtenir une diminution de la valeur d'erreur ERR après un ensemble de cycles. Cet ensemble de cycles constitue une itération. Des itérations similaires se succèdent et les valeurs d'erreurs diminuent itération après itération. Les itérations s'arrêtent lorsqu'un critère de convergence est atteint. Le résultat fourni par le procédé est l'ensemble 38 (RESULT) correspondant à l'ensemble 30 des positions estimées à la dernière itération.

L'étape 32 comprend une étape 36 de modélisation. A l'étape 36, on utilise l'ensemble 30 de positions estimées des balises mobiles C pour déterminer un ensemble 39 de valeurs théoriques. Les valeurs théoriques résultent de modélisations des valeurs R1, R2, R3 et U qui seraient collectées si chaque balise mobile C était située à la position estimée correspondante. Une valeur théorique correspond à chacune des valeurs collectées R1, R2, R3 ou U d'un ensemble 40 des valeurs collectées décrites en relation avec la figure 3. Une étape de soustraction 42 de chacune des valeurs R1, R2, R3 et U de l'ensemble 40 des valeurs collectées à la valeur théorique correspondante de l'ensemble 39 de valeurs théoriques permet d'obtenir un ensemble DIF de différences. L'ensemble DIF de différences est utilisé à une étape 44 (COMPUTE ERROR) à laquelle la valeur d'erreur ERR est produite. A titre d'exemple, la valeur d'erreur ERR peut être la somme ou le maximum des valeurs absolues des différences contenues dans l'ensemble DIF. La valeur d'erreur ERR peut aussi correspondre à la somme des carrés de ces différences.

A titre d'exemple, le critère de convergence est atteint lorsque, pour toutes les balises mobiles C, la distance entre les positions estimées à deux itérations successives est inférieure à un seuil. Le seuil peut être de 1 m. Selon un autre exemple, le critère de convergence peut correspondre à une valeur atteinte par la valeur d'erreur ERR ou à un nombre maximum d'itérations.

La succession d'itérations démarre à partir d'un ensemble 46 de positions estimées initiales (INIT) des balises mobiles C. A titre d'exemple, les positions estimées initiales peuvent être des barycentres des positions des balises fixes B ou peuvent résulter d'un procédé classique de localisation basé sur les valeurs R1 d'intensités de réception par les balises mobiles C des signaux électromagnétiques émis par les balises fixes B.

Le procédé de localisation des balises mobiles C peut être exécuté à intervalles de temps réguliers, par exemple un intervalle de temps compris entre 8 secondes et 5 minutes. Dans ce cas, les positions estimées initiales peuvent correspondre aux positions déterminées à une exécution précédente du procédé de localisation.

Le traitement des valeurs R1, R2, R3 et U par l'unité de traitement 11 permet de déterminer la position de chaque balise mobile C en utilisant simultanément un nombre de valeurs supérieur au nombre de coordonnées à déterminer pour localiser la balise mobile C. En effet, le nombre de valeurs R1, de valeurs R2 ou de valeurs U associées à chaque balise mobile C est égal au nombre NB de balises fixes B. Le nombre de valeurs R3 associées à chaque balise mobile C est de 2(NC - 1), NC étant le nombre de balises mobiles C. Ainsi, 3NB + 2(NC - 1) valeurs sont utilisées pour localiser une balise mobile C. Dans le mode de réalisation représenté en figure 2, dix valeurs sont combinées pour localiser une seule balise mobile C. Le fait d'utiliser un nombre élevé de valeurs pour localiser une balise mobile C permet d'obtenir une localisation précise, par exemple à mieux que 1 m près, et fiable.

De plus, comme cela a été mentionné précédemment, la position de chaque balise mobile est déterminée en utilisant des valeurs représentatives d'une part de signaux électromagnétiques et d'autre part de signaux ultrasonores, c'est-à-dire de signaux de natures différentes. Des éléments qui limitent la précision des positions déterminées, tels que l'orientation de la balise mobile ou la présence d'obstacles ou de cloisons sur le chemin des signaux, n'ont pas des effets identiques selon la nature de ces signaux. De ce fait, la précision et la fiabilité de localisation obtenues grâce à l'utilisation simultanée de signaux de natures différentes est supérieure à la précision et la fiabilité que l'on peut obtenir en utilisant seulement des signaux de nature électromagnétique ou seulement des signaux de nature ultrasonore.

En outre, l'étape de modélisation 36 peut prendre en compte des éléments de la configuration de la zone A tels que la présence d'obstacles ou de cloisons entre certaines des balises fixes et mobiles. De ce fait, les positions des balises mobiles déterminées par un procédé du type décrit ci-dessus sont particulièrement précises.

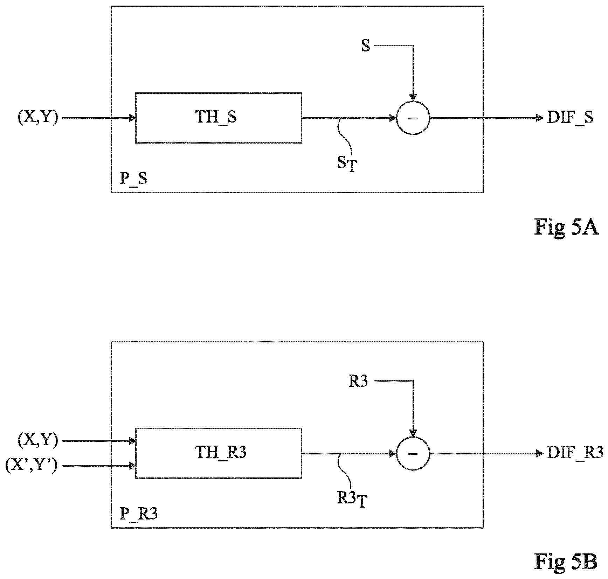

Les figures 5A et 5B illustrent des étapes d'un exemple de procédé de localisation des balises mobiles C. Les étapes illustrées en figures 5A et 5B sont incluses dans l'étape 32, décrite précédemment, de traitement des valeurs R1, R2, R3 et U.

La figure 5A illustre des étapes P_S de traitement de valeurs collectées S représentatives de signaux émis ou reçus par l'une des balises mobiles C de position estimée de coordonnées (X,Y). Chaque valeur collectée S est l'une des valeurs collectées R1, R2 et U décrites en relation avec la figure 3. Pour chaque valeur collectée S, une valeur théorique S_{T} résulte d'une étape TH_S de modélisation de la valeur S qui serait collectée si la balise mobile C était située à la position estimée. La valeur théorique S_{T} qui correspond à chaque valeur R1 résulte d'une modélisation du signal électromagnétique émis par l'une des balises fixes B et reçu par la balise mobile C considérée. La valeur théorique S_{T} qui correspond à chaque valeur R2 résulte d'une modélisation du signal électromagnétique émis par la balise mobile C et reçu par l'une des balises fixes B. La valeur théorique S_{T} qui correspond à chaque valeur collectée U résulte d'une modélisation du signal ultrasonore émis par l'une des balises fixes B et reçu par la balise mobile C.

La valeur S est ensuite soustraite de la valeur théorique S_{T} correspondante, ce qui fournit une différence DIF_S. Chaque différence DIF S ne dépend de la position que d'une seule des balises mobiles C.

La figure 5B illustre des étapes P_R3. Chaque étape P_R3 est une étape de traitement de l'une des valeurs collectées R3 décrites en relation avec la figure 3. La balise mobile qui émet le signal représenté par la valeur R3 a une position estimée de coordonnées respectives (X,Y). La balise mobile qui reçoit ce signal a une position estimée de coordonnées (X',Y'). L'étape de traitement P_R3 comprend une étape de modélisation TH_R3 qui détermine une valeur théorique R3_{T}. La valeur théorique R3_{T} correspond à une estimation de la valeur R3 qui serait collectée si les balises mobiles étaient situées aux positions estimées (X,Y) et (X',Y'). La valeur collectée R3 est ensuite soustraite de la valeur théorique R3_{T}, ce qui fournit une différence DIF_R3.

Contrairement aux différences obtenues aux étapes de traitement P_S de la figure 5A, chaque différence DIF_R3 dépend simultanément des positions estimées de deux balises d'un couple de deux balises mobiles distinctes.

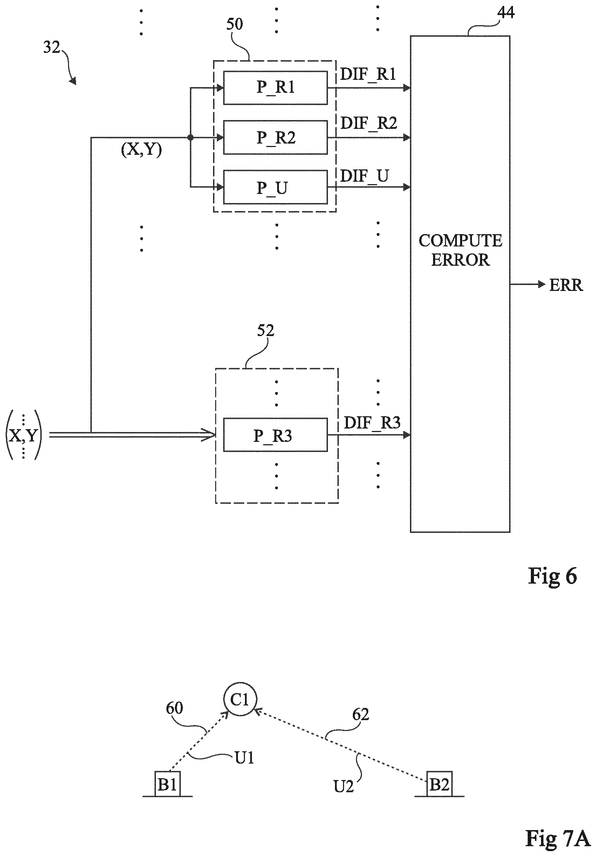

La figure 6 illustre un mode de réalisation plus détaillé de l'étape 32 décrite en relation avec la figure 4.

Pour chaque balise mobile C, l'étape 32 comprend un ensemble 50 d'étapes P_R1, P_R2 et P_U correspondant aux étapes P_S de traitement des valeurs collectées S respectives R1, R2 et U. L'ensemble 50 détermine les différences DIF_R1, DIF_R2 et DIF_U résultant du traitement des valeurs collectées R1, R2 et U associées à la balise mobile C considérée.

L'étape 32 comprend en outre un ensemble 42 de toutes les étapes P_R3 de traitement des valeurs R3 associées aux couples de balises mobiles distinctes. Les différences DIF_R1, DIF_R2, DIF_U et DIF_R3 constituent l'ensemble DIF des différences décrit en relation avec la figure 4.

En l'absence de l'ensemble 52 d'étapes, la position de chacune des balises mobiles C pourrait être déterminée indépendamment des autres balises mobiles C. En effet, chaque ensemble 50 d'étapes est associé à la position estimée d'une seule des balises mobiles C et fournit un ensemble de différences indépendamment des positions estimées des autres balises mobiles C. La présence de l'ensemble 52 d'étapes permet une détermination simultanée des positions de toutes les balises mobiles avec une précision supérieure à celle que l'on peut obtenir en localisant chaque balise mobile sans tenir compte simultanément de la position des autres balises mobiles.

Lorsque deux des balises fixes B et mobiles C sont éloignées et/ou sont dans deux pièces différentes, les signaux émis par l'une de ces balises peuvent ne pas être perçus par l'autre de ces balises. La valeur collectée R1, R2, R3 ou U correspondante peut alors avoir une valeur indéfinie ou inutilisable. Dans ce cas, à l'étape 32, on peut omettre l'étape P_S ou P_R3 associée à cette valeur collectée. La valeur de différence DIF_S ou DIF_R3 associée est alors omise dans l'obtention de la valeur d'erreur ERR.

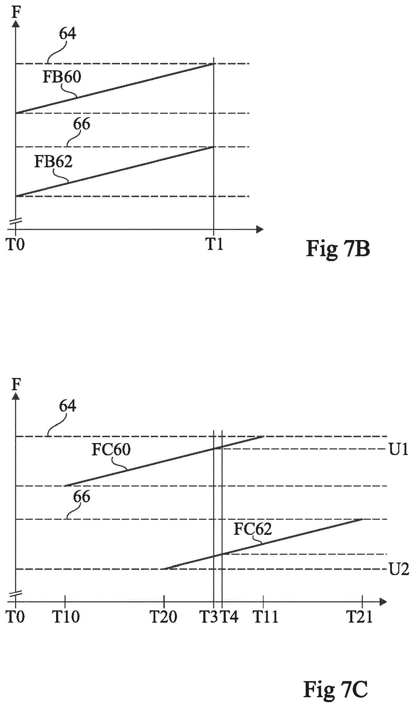

Les figures 7A, 7B et 7C illustrent un mode de réalisation d'une étape d'obtention des valeurs collectées U décrites précédemment, représentatives des signaux ultrasonores. A titre d'exemple illustratif, seules deux des balises fixes B, de références B1 et B2, et seule une des balises mobiles C, de référence C1, sont représentées.

La figure 7A représente les balises fixes B1 et B2 émettant des signaux ultrasonores respectifs 60 et 62 reçus par la balise mobile C1.

La figure 7B illustre, par des courbes respectives FB60 et FB62, l'évolution en fonction du temps des fréquences (F) des signaux 60 et 62 au moment de leurs émissions respectives par les balises fixes B1 et B2.

Le signal ultrasonore émis par chaque balise fixe B a une fréquence située dans une bande de fréquences attribuée. Les bandes de fréquences attribuées à des balises fixes B différentes sont disjointes. Dans l'exemple représenté, la fréquence du signal 60 est située dans une bande de fréquences 64 et la fréquence du signal 62 est située dans une bande de fréquences 66. Les signaux ultrasonores sont émis simultanément pendant une période d'émission comprise entre un instant initial T0 et un instant final T1. La fréquence de chaque signal ultrasonore varie au cours de la période d'émission. A titre d'exemple, cette fréquence augmente linéairement en balayant toute la largeur de la bande de fréquences associée. A titre d'exemple, la période d'émission a une durée comprise entre 10 ms et 30 ms. Chaque bande de fréquence peut avoir une largeur comprise entre 1 kHz et 3 kHz. Les signaux ultrasonores émis par les balises fixes B se propagent jusqu'aux balises mobiles C.

La figure 7C illustre, par des courbes respectives FC60 et FC62, l'évolution des fréquences (F) en fonction du temps des signaux 60 et 62 au moment de leur réception par la balise mobile C1.

Le signal 60 parvient au micro de la balise mobile C1 entre des instants T10 et T11. Le signal 62 parvient au micro de la balise mobile C1 entre des instants T20 et T21.

Les balises mobiles C reçoivent simultanément les signaux ultrasonores pendant une période de réception commune à toutes les balises mobiles C, cette période étant comprise entre des instants T3 et T4. A titre d'exemple, l'instant T3 de début de la période de réception est confondu avec l'instant T1 de fin de la période d'émission. Chaque balise mobile C échantillonne les signaux reçus et analyse les fréquences des signaux échantillonnés. Dans l'exemple représenté, la balise mobile C1 collecte une valeur de fréquence U1 dans la bande de fréquences 64 et une valeur de fréquence U2 dans la bande de fréquences 66. Les valeurs U1 et U2 sont liées aux distances séparant la balise mobile C1 des balises fixes respectives B1 et B2. La durée T4-T3 de la période de réception est choisie en fonction de la durée d'émission T1-T0 et de la largeur des bandes de fréquences pour obtenir une valeur de fréquence avec une précision optimale. A titre d'exemple, la période de réception a une durée comprise entre 1 ms et 5 ms, par exemple de 2 ms.

Selon un avantage, des obstacles présents sur le parcours d'un signal ultrasonore tel que décrit ci-dessus n'ont quasiment pas d'influence sur la valeur de fréquence perçue par les balises mobiles. L'utilisation simultanée de valeurs de fréquence de signaux ultrasonores et de valeurs d'intensité de signaux électromagnétiques permet ainsi de déterminer la position des balises mobiles avec une précision particulièrement élevée.

Selon un autre avantage, d'une part la durée de réception du signal ultrasonore par les balises mobiles est très inférieure à la durée d'émission du signal ultrasonore, et d'autre part la réception d'un signal ultrasonore consomme moins de puissance que l'émission de ce signal. En conséquence, la consommation énergétique des balises mobiles est réduite, permettant une durée de fonctionnement particulièrement élevée sans changer des piles ni recharger des batteries alimentant les balises mobiles.

A titre de variante de mode de réalisation de l'étape d'obtention des variables collectées U, chaque balise mobile C peut collecter la seule valeur U correspondant au signal ultrasonore reçu avec la plus grande intensité. Chaque balise mobile C peut aussi collecter les seules valeurs U correspondant à un nombre fixé à l'avance des signaux ultrasonores reçus avec la plus grande intensité ou avec le meilleur rapport signal/bruit. A titre d'exemple, ce nombre fixé à l'avance est égal à 3.

De plus, les bandes de fréquences attribuées à deux des balises fixes B peuvent être identiques dans le cas où ces deux balises fixes B sont suffisamment éloignées l'une de l'autre pour qu'aucune balise mobile C ne puisse percevoir à la fois les deux signaux ultrasonores émis par ces deux balises fixes B.

En outre, en présence d'une source ultrasonore parasite de fréquence comprise dans l'une des bandes de fréquences attribuées, les valeurs collectées correspondant à cette bande de fréquence pourraient être erronées. On peut prévoir une étape d'attribution aléatoire des différentes bandes de fréquences aux différentes balises fixes B avant l'émission des signaux ultrasonores. Cette étape d'attribution aléatoire permet d'obtenir un positionnement précis de toutes les balises mobiles lorsque l'on exécute le procédé de localisation plusieurs fois de suite, y compris en présence de la source ultrasonore parasite.

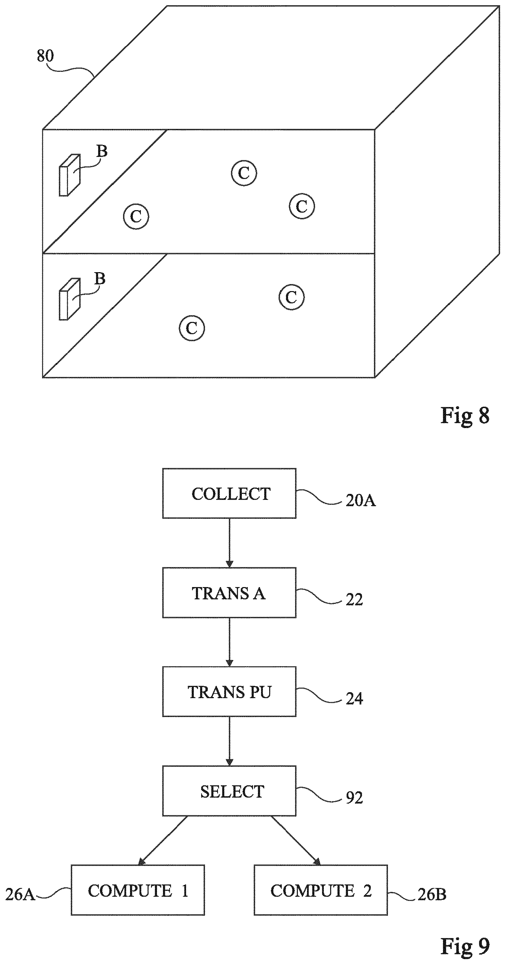

La figure 8 représente un mode de réalisation d'une zone 80, par exemple un bâtiment, comprenant des balises fixes B et des balises mobiles C' situées à des niveaux de hauteurs différents, par exemple à des étages différents. A titre d'exemple, le bâtiment comporte deux étages. En pratique, le nombre d'étapes peut être plus élevé. Chaque balise C' correspond à une balise C décrite en relation avec la figure 1 et comprend en outre un capteur de pression. On cherche à localiser chaque balise C' en déterminant son niveau de hauteur et sa position dans un plan horizontal.

La figure 9 représente un mode de réalisation d'un procédé de localisation des balises mobiles C' de la zone 80. Le procédé comprend :
une étape 20A (COLLECT), correspondant à une étape 20 de collecte de valeurs représentatives de signaux électromagnétiques et de signaux ultrasonores, à laquelle est ajoutée une collecte par chaque balise mobile C' d'une valeur représentative d'un signal de pression ambiante ; et
des étapes 22 et 24 de transmission des données collectées à l'unité A puis à l'unité de traitement (non représentées en figure 8).

Le procédé de localisation comprend ensuite une étape 92 de sélection (SELECT) à laquelle les niveaux de hauteur de chaque balise mobile C' sont déterminés à partir des valeurs collectées de pression ambiante.

Les valeurs R3 représentatives d'un signal émis par une balise mobile C' située à un étage et éventuellement reçu par une balise mobile C' située à un autre étage peuvent alors être omises, et les positions des balises mobiles C' situées à un étage peuvent être déterminées pour chaque étage indépendamment de la position des balises mobiles C' situées à un autre étage. Dans l'exemple représenté, le procédé comprend une étape 26A et une étape 26B, chacune des étapes 26A et 26B étant une étape de détermination de la position des balises mobiles C' situées à l'un des étages.

Des modes de réalisation particuliers ont été décrits. Diverses variantes et modifications sont possibles. En particulier, bien que, selon un mode de réalisation décrit précédemment, on ne cherche pas à déterminer les niveaux de hauteur des balises mobiles C', le niveau de hauteur peut aussi être déterminé en ajoutant une coordonnée Z aux coordonnées X et Y de la position estimée de chaque balise mobile C'. En outre, bien que le niveau de hauteur puisse être déterminé à partir d'une valeur représentative d'un signal de pression, le niveau de hauteur peut être déterminé à partir de toute autre valeur représentative d'un signal reçu par chaque balise mobile C' et dépendant du niveau de hauteur de la balise mobile C'.

Bien que, dans les modes de réalisation décrits, seuls des signaux électromagnétiques et ultrasonores soient utilisés simultanément pour localiser les balises mobiles, d'autres modes de réalisation sont possibles dans lesquels d'autres signaux d'autres natures sont utilisés simultanément avec les signaux électromagnétiques et ultrasonores, les valeurs représentatives de ces autres signaux collectées par les balises mobiles dépendant de la position des balises mobiles. Ces autres signaux peuvent être des signaux de température ambiante, de niveau d'éclairage ambiant, de niveau sonore, de champ magnétique, de niveau ambiant de signaux radio, de temps d'arrivée de signaux radio. Dans le cas d'une application marine où des balises mobiles sont dans de l'eau de mer, ces autres signaux peuvent être des signaux de salinité de l'eau. Les valeurs représentatives de ces autres signaux sont ensuite soustraites à des valeurs théoriques correspondantes déterminées au cours d'étapes de modélisation, et les différences obtenues sont inclues dans l'ensemble des différences utilisées pour produire la valeur d'erreur ERR. La localisation des éléments mobiles peut être obtenue avec une précision et une fiabilité d'autant plus grandes que les natures des signaux utilisés simultanément sont diverses.

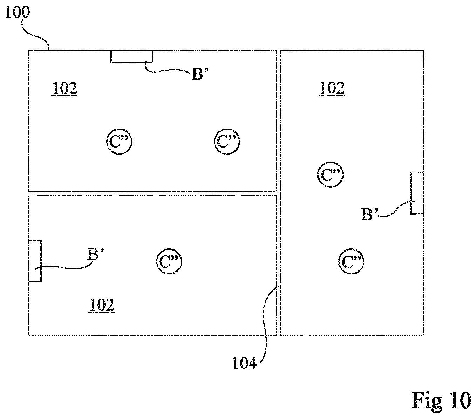

A titre d'exemple, les valeurs théoriques correspondant à des signaux de température ambiante, de niveau d'éclairage ambiant, de niveau sonore, de champ magnétique et/ou de niveau ambiant ou de temps d'arrivée de signaux radio, peuvent être déterminées à partir des positions et des propriétés connues de sources connues respectivement de chaleur, de lumière, de bruit, de champ magnétique et/ou de signaux radio, par modélisation de lois physiques connues de l'homme du métier, en tenant par exemple compte de la présence d'obstacles connus sur le chemin de ces signaux. Pour chaque signal, la valeur théorique correspondante peut ainsi être déterminée pour chaque position estimée de la balise mobile à partir des positions et des propriétés d'une ou plusieurs sources du signal, par modélisation de lois physiques connues de l'homme du métier. Une autre manière de déterminer les valeurs théoriques de signaux tels que la température, le niveau d'éclairage ambiant ou le niveau sonore, est illustrée ci-après en relation avec la figure 10.

La figure 10 est une vue de dessus schématique d'une zone 100, par exemple l'étage d'un bâtiment, comprenant des balises fixes B' et des balises mobiles C". Les balises fixes B' correspondent aux balises fixes B décrites en relation avec la figure 1. Les balises C" correspondent aux balises C décrites en relation avec la figure 1 et peuvent éventuellement correspondre aux balises C' décrites en relation avec la figure 8.

La zone 100 est divisée en plusieurs pièces 102, trois pièces 102 étant illustrées ici à titre d'exemple bien qu'un nombre différent de pièces soit possible. Les pièces 102 sont séparées par des cloisons 104, et les balises mobiles C" peuvent passer d'une pièce 102 à l'autre par des ouvertures telles que des portes, non représentées. A titre d'exemple, chaque pièce comprend une balise fixe B'.

Chacune des balises fixes B' et mobiles C" comprend, en plus des éléments concernant les signaux ultrasonores et les signaux électromagnétiques tels que décrits ci-dessus, un capteur d'un autre signal. A titre d'exemple, on décrit ici la manière de déterminer des valeurs théoriques dans le cas où cet autre signal est un niveau d'éclairage ambiant.

Le procédé de localisation des balises mobiles C" correspond au procédé décrit ci-dessus en relation avec la figure 2, dans lequel chacune des balises fixes B' et mobiles C" mesure en outre le niveau d'éclairage ambiant. A titre d'exemple, le niveau d'éclairage ambiant mesuré peut prendre trois valeurs, la valeur 0 correspondant à l'obscurité, la valeur 0,5 correspondant à un éclairage artificiel, et la valeur 1 correspondant à la lumière du jour.

A l'étape 32 du procédé, la valeur théorique L_{T} correspondant à chaque position estimée (X,Y) d'une balise mobile C" est la valeur mesurée par la balise fixe B' qui se trouve dans la pièce 102 contenant la position estimée (X,Y). La valeur d'éclairage ambiant L mesurée par la balise C" considérée est soustraite de la valeur L_{T} pour obtenir une différence DIF_L. Les différences DIF_L des diverses balises mobiles sont incluses dans l'ensemble des différences DIF utilisé à l'étape 44 de production de la valeur d'erreur.

Bien que les valeurs mesurées du signal puissent prendre à titre d'exemple trois valeurs, les valeurs mesurées du signal peuvent prendre deux ou plus de trois valeurs, ou peuvent être toute valeur représentative du niveau d'éclairage mesuré. De plus, bien que l'on ait décrit une seule balise B' par pièce 102, on peut utiliser plusieurs balises B' dans une même pièce 102, et déterminer alors la valeur théorique correspondante en combinant les mesures des balises B'. Une pièce 102 peut aussi contenir à la fois une ou plusieurs balises B' équipées de capteurs de niveau d'éclairage ambiant et des balises B dépourvues de capteurs de niveau d'éclairage ambiant.

En outre, bien que le dispositif décrit en relation avec la figure 10 utilise des signaux de niveau d'éclairage ambiant, on peut utiliser de même des signaux de niveau sonore ou de température ou tout autre type de signal non transmis à travers les cloisons. Les valeurs théoriques sont alors déterminées de manière similaire. En outre, bien que ce dispositif utilise, en plus des signaux ultrasonores et électromagnétiques, un seul autre signal, on peut utiliser simultanément, en plus des signaux ultrasonores et électromagnétiques, plusieurs signaux de natures différentes non transmis à travers les cloisons.

Dans les divers modes de réalisation décrits ci-dessus, on a décrit une étape TH_S de modélisation de valeurs théoriques. Une première partie de cette étape de modélisation peut être effectuée préalablement, par exemple avant la première mise en oeuvre du procédé de localisation des balises mobiles, au cours d'une étape d'initialisation. A titre d'exemple, à cette étape, on choisit dans la zone considérée un ensemble de positions estimées (X,Y) selon un maillage. On détermine ensuite la valeur théorique pour chacune des positions choisies, et on mémorise cette valeur. A la mise en oeuvre du procédé, on effectue une seconde partie de l'étape de modélisation, à laquelle on détermine les valeurs théoriques pour les positions estimées (X,Y) à partir des valeurs mémorisées.

De plus, dans des modes de réalisation décrits, des exemples particuliers de détermination d'une valeur d'erreur ERR à partir d'un ensemble de différences ont été décrits. La valeur d'erreur ERR peut être déterminée de toute autre manière adaptée. En particulier, la valeur d'erreur peut correspondre à toute norme d'un vecteur dont les coordonnées sont lesdites différences, plus particulièrement à toute norme dans laquelle les coordonnées de ce vecteur sont multipliées par des coefficients de pondération adaptés. La valeur d'erreur peut aussi être toute valeur dépendant d'une manière croissante de cette norme, par exemple une fonction puissance, par exemple le carré de cette norme.

Dans l'exemple où des coefficients de pondération sont utilisés, chaque coefficient de pondération correspond à un degré de confiance que l'on accorde au signal considéré. Le degré de confiance peut être ajusté, par exemple à chaque mise en oeuvre du procédé de localisation, en fonction de l'historique de diverses mesures effectuées avant la mise en oeuvre du procédé, par exemple les mesures effectuées lors de mises en oeuvre successives précédentes du procédé, ou des mesures préalables effectuées avant la première mise en oeuvre du procédé. A titre d'exemple, chaque coefficient de pondération est le produit d'un coefficient de pondération initial constant, choisi en fonction de la nature du signal, et d'un coefficient d'ajustement que l'on fait varier pour ajuster le degré de confiance.

Bien que, dans des modes de réalisation décrits, l'unité de traitement 11 comprenne un ordinateur, l'unité de traitement peut être composée de plusieurs ordinateurs connectés en réseau. De plus, dans d'autres modes de réalisation, l'unité de collecte A et l'unité de traitement peuvent être confondus.

## Revendications

1. Procédé de détermination simultanée de positions spatiales de balises mobiles (C) dans une zone (1; 80) comportant des balises fixes (B), comprenant :
une étape a) (20 ; 20A) comportant :
- l'émission par chacune des balises fixes et mobiles d'un premier signal et l'émission par chaque balise fixe d'un deuxième signal ;
- la collecte par chaque balise mobile de valeurs (R1) représentatives des premiers signaux émis par les balises fixes ;
- la collecte par chaque balise mobile de valeurs (U) représentatives des deuxièmes signaux (60, 62), les deuxièmes signaux et les premiers signaux étant de natures différentes ; et
- la collecte par chaque balise d'une valeur représentative d'un troisième signal de nature différente de la nature des premiers signaux et de la nature du deuxième signal ; et
une étape b) (26 ; 26A, 26B) de détermination d'une suite d'ensembles de positions estimées des balises mobiles dans laquelle :
- chaque ensemble de positions estimées (30) est associé à une valeur d'erreur (ERR) représentative de l'ensemble des différences (DIF), entre les valeurs collectées à l'étape a) et des valeurs théoriques (S_{T}, R3_{T}) correspondantes déterminées par une modélisation à partir dudit ensemble de positions estimées ; et
- les valeurs d'erreur associées à des ensembles successifs de positions estimées sont décroissantes, la suite s'arrêtant lorsqu'un critère de convergence est atteint.

2. Procédé selon la revendication 1, dans lequel l'étape a) (20; 20A) comprend la collecte par chaque balise fixe (B) de valeurs (R2) représentatives des premiers signaux émis par au moins certaines des balises mobiles (C).

3. Procédé selon la revendication 1 ou 2, dans lequel l'étape a) (20; 20A) comprend la collecte par chaque balise mobile (C) de valeurs (R3) représentatives des premiers signaux émis par au moins certaines des balises mobiles distinctes de ladite balise mobile.

4. Procédé selon l'une quelconque des revendications 1 à 3, dans lequel les premiers signaux sont des signaux électromagnétiques, et les valeurs (R1; R2 ; R3) représentatives des signaux électromagnétiques sont des intensités reçues.

5. Procédé selon l'une quelconque des revendications 1 à 4, dans lequel ledit au moins un deuxième signal (60, 62) est un signal ultrasonore émis par l'une des balises fixes (B), le signal ultrasonore étant de fréquence d'émission variable et la valeur (U) représentative du signal ultrasonore étant une fréquence reçue pendant une période de réception.

6. Procédé selon l'une quelconque des revendications 1 à 4, dans lequel l'étape a) comprend la collecte par chaque balise mobile de valeurs (U) représentatives de signaux ultrasonores (60, 62), chaque signal ultrasonore étant émis par l'une des balises fixes (B1, B2) et étant de fréquence d'émission variable, les valeurs (U1, U2) représentatives des signaux ultrasonores étant des fréquences reçues pendant une période de réception, les signaux ultrasonores ayant des fréquences comprises dans des bandes de fréquences (64, 66) disjointes.

7. Procédé selon la revendication 5 ou 6, dans lequel le signal ultrasonore (60, 62) est émis pendant une période d'émission de durée comprise entre 10 ms et 30 ms, la fréquence d'émission variant dans une bande de fréquences (64, 66) de largeur comprise entre 1 kHz et 3 kHz, la période de réception ayant une durée comprise entre 1 ms et 5 ms.

8. Procédé selon l'une quelconque des revendications 1 à 7, dans lequel le troisième signal est d'une nature choisie dans le groupe suivant :
- température ambiante ;
- niveau de lumière ambiante ;
- niveau sonore ;
- champ magnétique ;
- niveau ambiant de signaux radio ;
- temps d'arrivée de signaux radio ; et
- salinité, les balises mobiles étant immergées dans de l'eau de mer.

9. Procédé selon l'une quelconque des revendications 1 à 8, comprenant en outre une étape (20A) de collecte par chaque balise mobile (C) d'une valeur d'un quatrième signal dépendant du niveau de hauteur de la balise mobile, suivie avant l'étape b) (26A, 26B) d'une étape (92) de détermination des niveaux de hauteur des balises mobiles.

10. Procédé selon la revendication 9, dans lequel les niveaux de hauteur sont parmi plusieurs niveaux de hauteur, et à l'étape b), les positions des balises mobiles situées à un des niveaux de hauteur sont déterminées indépendamment des positions des balises mobiles situées aux autres niveaux de hauteur.

11. Procédé selon la revendication 9 ou 10, dans lequel le quatrième signal est un signal de pression.

12. Procédé selon l'une quelconque des revendications 1 à 11, dans lequel le premier ensemble (46) de positions de la suite d'ensembles de positions estimées comprend des positions déterminées à une exécution précédente des étapes a) et b) et/ou comprend des barycentres de positions d'au moins certaines des balises fixes (B).

13. Procédé selon l'une quelconque des revendications 1 à 12, dans lequel la valeur d'erreur (ERR) représentative d'un ensemble de différences (DIF) correspond à une norme d'un vecteur dont les coordonnées sont lesdites différences.

14. Procédé selon l'une quelconque des revendications 1 à 13, dans lequel le critère de convergence est atteint lorsque toutes les positions estimées contenues dans deux ensembles (30) successifs de positions estimées sont séparées d'une distance inférieure à un seuil.

## Patentansprüche

1. Verfahren zur gleichzeitigen Bestimmung der räumlichen Positionen von mobilen Baken (C) in einem Gebiet (1; 80) mit festen Baken (B), wobei das Verfahren Folgendes aufweist:
einen Schritt a) (20; 20A), der Folgendes aufweist:
- die Aussendung eines ersten Signals durch jede der festen und mobilen Baken und die Aussendung eines zweiten Signals durch jede feste Bake;
- die Erfassung von Werten (R1) durch jede mobile Bake, wobei die Werte für die von den festen Baken ausgesendeten ersten Signale repräsentativ sind;
- die Erfassung von Werten (U) durch jede mobile Bake, wobei die Werte für die zweiten Signale (60, 62) repräsentativ sind, wobei die zweiten Signale und die ersten Signale von unterschiedlicher Art sind; und
- die Erfassung eines Wertes durch jede Bake, wobei der Wert für ein drittes Signal repräsentativ ist, dessen Art sich von der Art der ersten Signale und der Art des zweiten Signals unterscheidet; und
einen Schritt b) (26; 26A, 26B) der Bestimmung einer Aufeinanderfolge von Gesamtheiten von geschätzten Positionen der mobilen Baken, wobei:
- jede Gesamtheit von geschätzten Positionen (30) mit einem Fehlerwert (ERR) assoziiert ist, der für die Gesamtheit von Differenzen (DIF) zwischen den in Schritt a) gesammelten Werten und entsprechenden theoretischen Werten (S_{T}, R3_{T}) repräsentativ ist, die durch eine Modellierung auf der Grundlage einer Gesamtheit von geschätzten Positionen bestimmt werden; und
- die Fehlerwerte, die mit aufeinanderfolgenden Gesamtheiten von geschätzten Positionen assoziiert sind, abnehmen, wobei die Aufeinanderfolge beendet wird, wenn ein Konvergenzkriterium erreicht wurde.

2. Verfahren nach Anspruch 1, bei dem der Schritt a) (20; 20A) die Erfassung von Werten (R2) durch jede feste Bake (B) aufweist, die für die ersten Signale repräsentativ sind, die von mindestens einigen der mobilen Baken (C) ausgesendet werden.

3. Verfahren nach Anspruch 1 oder 2, wobei der Schritt a) (20; 20A) die Erfassung von Werten (R3) durch jede mobile Bake (C) aufweist, die für die ersten Signale repräsentativ sind, die von mindestens einigen der mobilen Baken ausgesendet werden, die sich von der mobilen Bake unterscheiden.

4. Verfahren nach einem der Ansprüche 1 bis 3, wobei die ersten Signale elektromagnetische Signale sind und die für die elektromagnetischen Signale repräsentativen Werte (R1; R2; R3) Empfangsintensitäten sind.

5. Verfahren nach einem der Ansprüche 1 bis 4, wobei das mindestens eine zweite Signal (60, 62) ein Ultraschallsignal ist, das von einer der festen Baken (B) ausgesendet wird, wobei das Ultraschallsignal eine variable Sendefrequenz hat und der für das Ultraschallsignal repräsentative Wert (U) eine während einer Empfangsperiode empfangene Frequenz ist.

6. Verfahren nach einem der Ansprüche 1 bis 4, wobei der Schritt a) das Sammeln von Werten (U) durch jede mobile Bake aufweist, die für Ultraschallsignale (60, 62) repräsentativ sind, wobei jedes Ultraschallsignal von einer der festen Baken (B1, B2) ausgesendet wird und eine variable Sendefrequenz aufweist, wobei die Werte (U1, U2), die für die Ultraschallsignale repräsentativ sind, Frequenzen sind, die während einer Empfangsperiode empfangen werden, wobei die Ultraschallsignale Frequenzen aufweisen, die zu getrennten Frequenzbändern (64, 66) gehören.

7. Verfahren nach Anspruch 5 oder 6, wobei das Ultraschallsignal (60, 62) während einer Sendeperiode mit einer Dauer im Bereich von 10 ms bis 30 ms ausgesendet wird, wobei die Sendefrequenz in einem Frequenzband (64, 66) mit einer Breite im Bereich von 1 kHz bis 3 kHz variiert und die Empfangsperiode eine Dauer im Bereich von 1 ms bis 5 ms aufweist.

8. Verfahren nach einem der Ansprüche 1 bis 7, wobei das dritte Signal von einer Art ist, die aus der folgenden Gruppe ausgewählt wird:
- Raumtemperatur;
- Umgebungslichtpegel;
- Schallpegel;
- Magnetfeld;
- Umgebungsradiosignalpegel;
- Ankunftszeit des Funksignals; und
- Salzgehalt, sofern die mobilen Baken in Meerwasser eingetaucht sind.

9. Verfahren nach einem der Ansprüche 1 bis 8, das ferner einen Schritt (20A) der Erfassung eines Wertes eines vierten Signals durch jede mobile Bake (C) in Abhängigkeit vom Höhenniveau der mobilen Bake aufweist, gefolgt von einem Schritt (92) der Bestimmung der Höhenniveaus der mobilen Baken vor Schritt b) (26A, 26B).

10. Verfahren nach Anspruch 9, wobei die Höhenniveaus zu einer Vielzahl von Höhenniveaus gehören und in Schritt b) die Positionen der mobilen Baken, die sich auf einem der Höhenniveaus befinden, unabhängig von den Positionen der mobilen Baken, die sich auf den anderen Höhenniveaus befinden, bestimmt werden.

11. Verfahren nach Anspruch 9 oder 10, wobei das vierte Signal ein Drucksignal ist.

12. Verfahren nach einem der Ansprüche 1 bis 11, wobei die erste Gesamtheit (46) von Positionen der Aufeinanderfolge von Gesamtheiten von geschätzten Positionen Positionen aufweist, die bei einer vorherigen Ausführung der Schritte a) und b) bestimmt wurden, und/oder Baryzentren von Positionen von zumindest einigen der festen Baken (B) aufweist.

13. Verfahren nach einem der Ansprüche 1 bis 12, wobei der Fehlerwert (ERR), der für eine Gesamtheit von Differenzen (DIF) repräsentativ ist, einer Norm eines Vektors entspricht, der die Differenzen als Koordinaten aufweist.

14. Verfahren nach einem der Ansprüche 1 bis 13, wobei das Konvergenzkriterium erreicht ist, wenn alle geschätzten Positionen, die in zwei aufeinanderfolgenden Gesamtheiten (30) von geschätzten Positionen enthalten sind, durch einen Abstand getrennt sind, der kleiner als ein Schwellenwert ist.

## Claims

1. Method of simultaneous determination of spatial positions of mobile beacons (C) in an area (1; 80) comprising fixed beacons (B), comprising:
a step a) (20; 20A) comprising:
- the emission by each of the fixed and mobile beacons of a first signal and the emission by each fixed beacon of a second signal;
- the collection by each mobile beacon of values (R1) representative of the first signals emitted by the fixed beacons;
- the collection by each mobile beacon of values (U) representative of the second signals (60, 62), the second signals and the first signals being of different natures; and
- the collection by each beacon of a value representative of a third signal of a nature different from the nature of the first signals and from the nature of the second signal; and
a step b) (26; 26A, 26B) of determination of a sequence of sets of estimated positions of the mobile beacons, wherein:
- each set of estimated positions (30) is associated with an error value (ERR) representative of the set of the differences (DIF), between the values collected at step a) and corresponding theoretical values (S_{T}, R3_{T}) determined by a modeling based on said set of estimated positions; and
- the error values associated with successive sets of estimated positions are decreasing, the sequence stopping when a convergence criterion has been reached.

2. Method according to claim 1, wherein step a) (20; 20A) comprises the collection by each fixed beacon (B) of values (R2) representative of the first signals emitted by at least some of the mobile beacons (C).

3. Method according to claim 1 or 2, wherein step a) (20; 20A) comprises the collection by each mobile beacon (C) of values (R3) representative of the first signals emitted by at least some of the mobile beacons distinct from said mobile beacon.

4. Method according to any of claims 1 to 3, wherein the first signals are electromagnetic signals, and the values (R1; R2; R3) representative of the electromagnetic signals are received intensities.

5. Method according to any of claims 1 to 4, wherein said at least one second signal (60, 62) is an ultrasound signal emitted by one of the fixed beacons (B), the ultrasound signal having a variable emission frequency and the value (U) representative of the ultrasound signal being a frequency received during a reception period.

6. Method according to any of claims 1 to 4, wherein step a) comprises the collection by each mobile beacon of values (U) representative of ultrasound signals (60, 62), each ultrasound signal being emitted by one of the fixed beacons (B1, B2) and having a variable emission frequency, the values (U1, U2) representative of the ultrasound signals being frequencies received during a reception period, the ultrasound signals having frequencies pertaining to separate frequency bands (64, 66).

7. Method according to claim 5 or 6, wherein the ultrasound signal (60, 62) is emitted during an emission period having a duration in the range from 10 ms to 30 ms, the emission frequency varying in a frequency band (64, 66) having a width in the range from 1 kHz to 3 kHz, the reception period having a duration in the range from 1 ms to 5 ms.

8. Method according to any of claims 1 to 7, wherein the third signal is of a nature selected from the following group:
- room temperature;
- ambient light level;
- sound level;
- magnetic field;
- ambient radio signal level;
- radio signal arrival time; and
- salinity, the mobile beacons being immersed in sea water.

9. Method according to any of claims 1 to 8, further comprising a step (20A) of collection by each mobile beacon (C) of a value of a fourth signal depending on the height level of the mobile beacon, followed before step b) (26A, 26B) by a step (92) of determination of the height levels of the mobile beacons.

10. Method according to claim 9, wherein the height levels are among a plurality of height levels, and at step b), the positions of the mobile beacons located at one of the height levels are determined independently from the positions of the mobile beacons located at the other height levels.

11. Method according to claim 9 or 10, wherein the fourth signal is a pressure signal.

12. Method according to any of claims 1 to 11, wherein the first set (46) of positions of the sequence of sets of estimated positions comprises positions determined at a previous execution of steps a) and b) and/or comprises barycenters of positions of at least some of the fixed beacons (B).

13. Method according to any of claims 1 to 12, wherein the error value (ERR) representative of a set of differences (DIF) corresponds to a norm of a vector having said differences as coordinates.

14. Method according to any of claims 1 to 13, wherein the convergence criterion is reached when all the estimated positions contained in two successive sets (30) of estimated positions are separated by a distance shorter than a threshold.
